# EUROPEAN PATENT SPECIFICATION

(11) **EP 0 819 911 B1**
(45) Date of publication and mention of the grant of the patent: **12.06.2002**
(21) Application number: 96305190.9
(22) Date of filing: 15.07.1996
(51) Int. Cl.: G01C 15/00

(54) **Optical level and plumb instrument**
Optisches Nivellier- und Lotinstrument
Instrument optique de mesure de niveau et de la verticale

(43) Date of publication of application: 21.01.1998
(73) Proprietor: Tai Tsu Opto Technology Co., Ltd., Shijr City, Taipei (TW)
(72) Inventor: Le, Mike, Sanchung, Taipei Hsien (TW)
(74) Representative: Stoner, Gerard Patrick

(56) References cited:
- EP-A- 0 586 804
- CH-A- 675 037
- DE-U- 9 307 359
- US-A- 3 858 984
- US-A- 4 374 365

## Description

The present invention relates to an optical levelling and plumbing instrument.

A conventional laser beam level instrument may include a laser diode mounted on a pendulous platform suspended from a frame which moves freely under the influence of gravity to provide automatic self-levelling. A vertical laser beam emitted from the diode is deflected by a prism which is rotated as driven by a motor, thereby providing a levelling reference through a horizontal plane.

However, such an instrument requires a rotating mechanism such as driven by a motor and transmission belt to have the drawbacks of heavy weight, increased production cost and maintenance problems.

US Patent No. 3'858'984 describes a conventional optical plumb leveler having a weight mounted on a universal joint defining the vertical direction.

The present inventor has invented an optical levelling and plumbing instrument without the rotating mechanism.

According to the present invention, there is provided an optical levelling, plumbing and angle-calibrating instrument including: a frame; a plumb body universally pendulously mounted on the frame and defining a vertical plumb line gravitationally; at least an illuminator electrically connected to a power supply and mounted on the plumb body for emitting laser light; and at least a cylindrical-surfaced lens mounted on the plumb body in front of the illuminator for planarly diverging the laser light as emitted from the illuminator through the lens to form a laser light plane transverse to a lens axis of the cylindrical-surfaced lens, whereby the laser light plane will projectively intersect an objective wall to form a straight line of optical image, serving as a reference line for levelling or plumbing use.

The present invention will be further described with reference to the accompanying drawing, in which:
Figure 1 is an elevational drawing of the present invention;
Figure 2 is a partial perspective illustration showing the illuminators and the cylindrical-surfaced lens in accordance with the present invention;
Figure 3 is an illustration showing a three dimensional display of optical images of the light beams as emitted from the illuminators of the present invention;
Figure 4 is an illustration showing a plurality of cylindrical-surfaced lenses linearly connected in series for magnifying the optical image of the light beam;
Figure 5 shows a circular optical image of 360 degrees as effected by a plurality of lens and illuminators radially connected in series; and

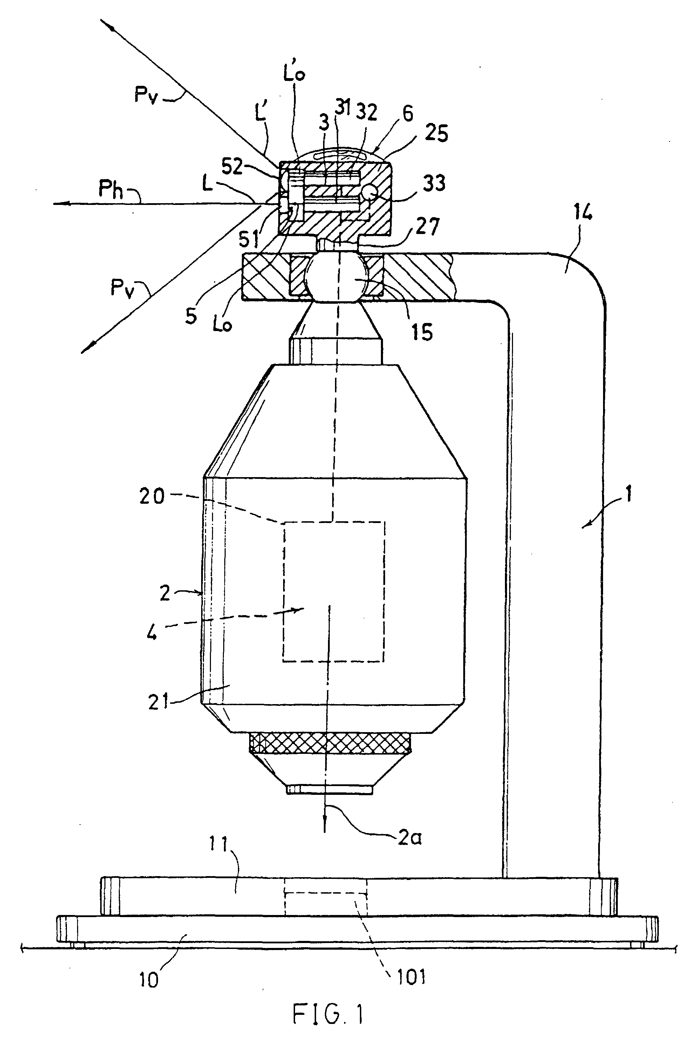

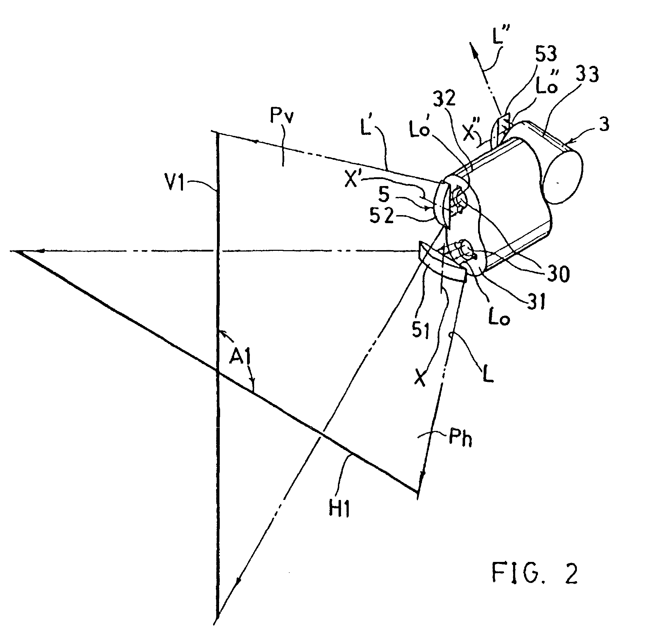

As shown in Figures 1 and 2, the present invention comprises: a frame or housing 1, a plumb body 2 universally pendulously mounted on the frame 1, an illuminating means 3 secured on the plumb body 2 for emitting parallel light beam, a power supply means 4 including power source of batteries and a control means (not shown) for adjusting the power (such as voltage or current) supplied to the illuminating means 3 for adjusting the brightness of the optical images produced by the illuminating means 3, and a cylindrical-surfaced lens means 5 mounted on the plumb body 2 for magnifying or diverging light beam as deflected through the cylindrical-surfaced lens means 5.

A horizontal gauge 6 is fixed on a top of the plumb body 2 having an air bubble formed in a liquid within the gauge 6 for calibrating a horizontal levelling of this instrument.

The power supply means 4 may be stored or mounted in the plumb body 2 or in the frame or housing 1, not limited in this invention.

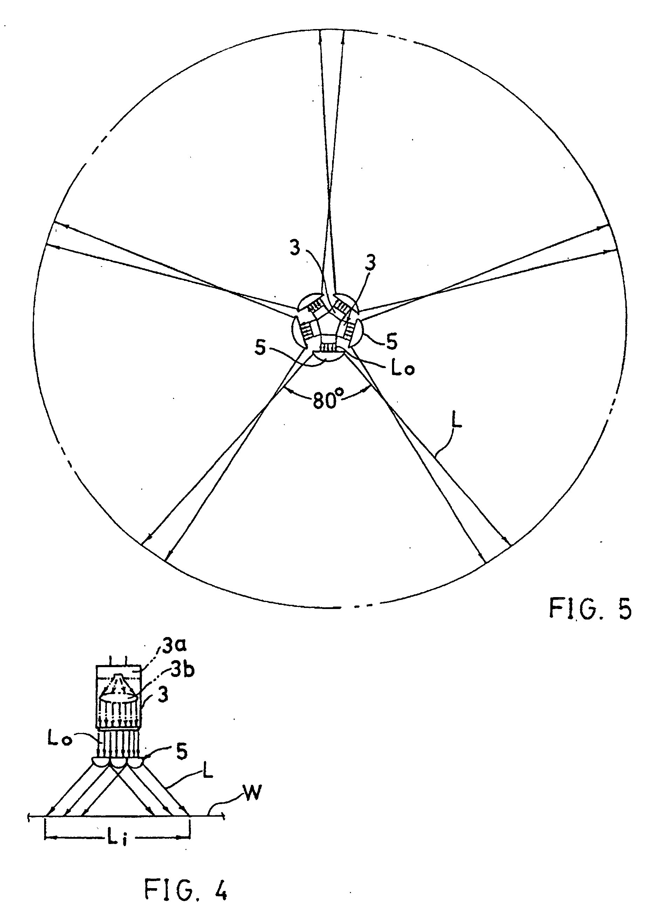

The illuminating means 3 includes a plurality of illuminators 31, 32, 33 each illuminator electrically connected to the power supply means 4 and each illuminator comprising a light source such as a laser diode 3a and a collimating lens 3b as shown in Figure 4 for producing parallel light (or laser) beam Lo as emitted from the light source 3a.

The illuminators 31, 32, 33 of the illuminating means 3 may be mounted on a holder portion 25 positioned on a top portion of the plumb body 2 as shown in Figure 1 or the illuminators may be installed on other suitable positions of the plumb body 2, not limited in this invention.

The frame 1 includes a base 11 rotatably mounted on a shaft 101 of a platform 10 resting on a surface, a cantilever 14 protruding upwardly from the base 11 for universally securing a neck portion 27 of the plumb body 2 on the cantilever 14 by an universal swivel means 15 such as an universal coupling. The base 11 rotates about the shaft 101 for its rotation of 360 degrees.

The frame 1 may be modified to be other shapes or structures, such as an envelope or closed housing (not shown) for shielding the plumb body 2 within the housing.

The plumb body 2 includes a battery chamber 20 recessed in the body 2 for storing battery or batteries in the chamber 20, and a plumb portion 21 formed on a lower or middle portion of the body 2, with the plumb body 2 defining a vertical plumb line 2a aligned with a gravity center of the plumb body 2.

The illuminating means 3 includes: a first illuminator 31 for emitting a first parallel light beam Lo defining a horizontal plane projectively perpendicular to the vertical plumb line 2a of the plumb body 2, a second illuminator 32 juxtapositional to the first illuminator 31 for emitting a second parallel light beam Lo' defining a vertical plane projectively parallel to the vertical plumb line 2a, and a third illuminator 33 transverse to the first and second illuminators 31, 32 for emitting a third parallel light beam Lo" projectively perpendicular to the second light beam Lo' emitted from the second illuminator 32.

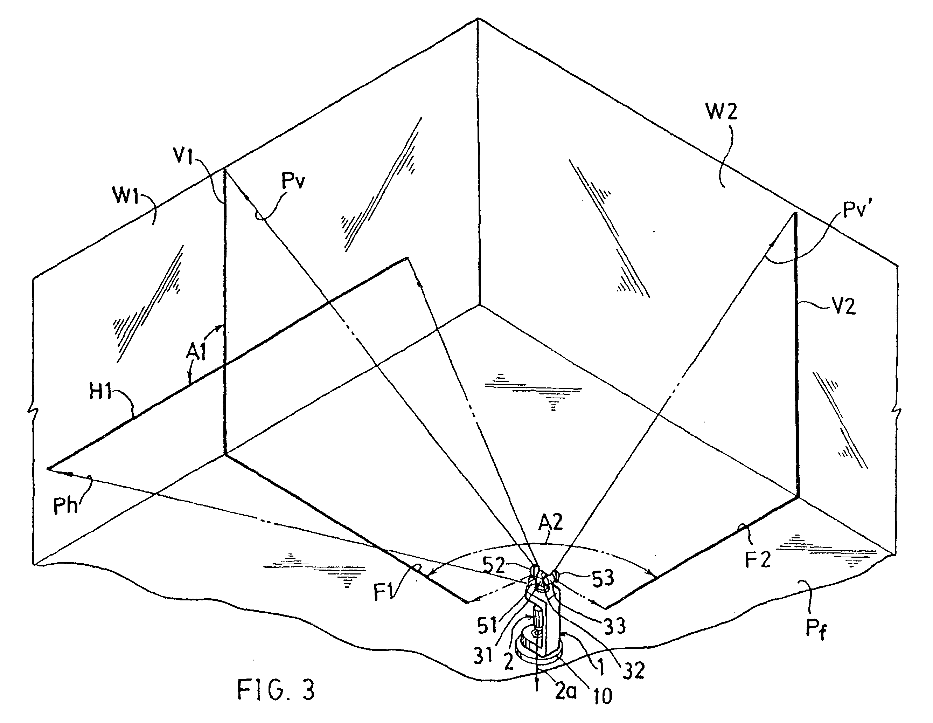

The cylindrical-surfaced lens means 5 includes: a first cylindrical-surfaced lens 51 positioned in front of the first illuminator 31 and having a first lens axis X parallel to the vertical plumb line 2a of the plumb body 2 for planarly magnifying or diverging the first parallel light beam Lo passing through and deflected by the first cylindrical-surfaced lens 51 to be a first diverging laser light plane L for producing a first horizontal straight line of optical image H1 which may be projectively displayed on a first vertical wall W1 as shown in Figure 3, a second cylindrical-surfaced lens 52 positioned in front of the second illuminator 32 and having a second lens axis X' projectively perpendicular to the first lens axis X of the first cylindrical-surfaced lens 51 for magnifying the second parallel light beam Lo' passing through and deflected by the second cylindrical-surfaced lens 52 to be a second laser plane L' for producing a first vertical straight line of optical image V1 which may be projectively displayed on the first vertical wall W1 to intersect the first horizontal straight line H1 to form a first right angle A1 of optical image, and a third cylindrical-surfaced lens 53 positioned in front of the third illuminator 33 and having a third lens axis X" projectively parallel to the second lens axis X' of the second cylindrical-surfaced lens 52 for magnifying the third parallel light beam Lo" passing through and deflected by the third cylindrical-surfaced lens 53 to be a third laser plane L" for producing a second vertical straight line V2 of optical image which may be projectively displayed on a second vertical wall W2 perpendicular to the first vertical wall W1.

The first vertical straight line V1 of optical image projectively intersects a horizontal base plane Pf to form a first base line F1 of optical image forming a first vertical plane Pv emerging from the light emitting point 30 of the second illuminator 32; while the second vertical straight line V2 of optical image projectively intersects the horizontal base plane Pf to form a second base line F2 of optical image forming a second vertical plane Pv' to define a second right angle A2 of optical image between the first and second vertical planes Pv, Pv', with the first horizontal straight line H1 forming a horizontal plane Ph perpendicular to the first vertical plane Pv as shown in Figure 3. The two base lines F1, F2 will serve as references in surveying, construction or measurement for plumbing and angle calibration.

The second vertical plane Pv' may be separated from the first vertical plane Pv with another angle, other than 90 degrees. The horizontal line H1, the vertical lines V1, V2 any serve for a direct optical-image referenece for levelling, plumbing and angle-calibrating purposes, without requiring any rotating mechanism such as a conventional driving motor. Therefore, the present invention provides an instrument for levelling, plumbing and angle calibration with a reliable precision, lower installation cost and minimized maintenance problem in comparison with conventional laser beam level instruments.

A plurality of cylindrical-surfaced lens 5 may be linearly connected in series as shown in Figure 4 to magnify the optical image Li by projecting the light beam on a wall W as magnified and deflected through the lens 5.

The plurality of cylindrical-surfaced lens 5 may be radially connected in series to form an optical image of 360 degrees, in which each lens may cover an angle of 80 degrees, thereby requiring five lenses 5 to form a circle as shown-in Figure 5. series for magnifying the laser light as emitted from the illuminator 3.

## Claims

1. An optical levelling, plumbing and angle-calibrating instrument comprising:
a frame (1) rotatably mounted on a platform (10);
a plumb body (2) universally pendulously mounted on the frame (1) and defining a vertical plumb line (2a) gravitationally;
an illuminating means (3) electrically connected to a power supply means (4) and mounted on the plumb body (2) for emitting laser light; and
a cylindrical-surfaced lens means (5) mounted on said plumb body (2) in front of said illuminating means (3) and having a lens axis projectively perpendicular to the laser light emitted from said illuminating means (3) for planarly diverging the laser light as emitted from said illuminating means (3) through said lens means (5) to form a laser light plane transverse to a lens axis of said cylindrical-surfaced lens means (5), with said laser light plane projectively intersecting an objective wall to form an optical image line;
**characterized in that**:
said illuminating means (3) includes: a first illuminator (31), a second illuminator (32) juxtapositional to said first illuminator (31), and a third illuminator (33) deviated from said first illuminator (31) and said second illuminator (32) with a right angle; and
said cylindrical-surfaced lens means (5) including a first cylindrical-surfaced lens (51) having a first lens axis (X) parallel to the vertical plumb line (2a) and positioned in front of said first illuminator (31) for forming a horizontal laser light plane (Ph) for levelling, a second cylindrical-surfaced lens (52) having a second lens axis (X') projectively perpendicular to said first lens axis (X) and positioned in front of said second illuminator (32) for forming a first vertical laser light plane (Pv) for plumbing, and a third cylindrical-surfaced lens (53) having a third lens axis (X") projectively perpendicular to said second lens axis (X') and positioned in front of said third illuminator (33) for forming a second vertical laser light plane (P'v) deviated from said first vertical laser light plane (Pv) with a right angle for plumbing and angle calibration.

2. An optical levelling, plumbing and angle-calbrating instrument according to Claim 1, wherein said power supply means (4) includes at least a battery mounted in said plumb body (2).

## Patentansprüche

1. Optisches Nivellierungs-, Lotungs- und Winkelkalibrierungsinstrument, umfassend:
einen Rahmen (1), der drehbar auf einer Plattform (10) montiert ist;
einen Lotkörper (2), der universell pendelnd auf dem Rahmen (1) montiert ist und durch Gravitationseinwirkung eine Lotrechte (2a) definiert;
ein Beleuchtungsmittel (3), das elektrisch an einem Stromversorgungsmittel (4) angeschlossen und auf dem Lotkörper (2) montiert ist, um Laserlicht auszusenden; und
ein Linsenmittel (5) mit zylindrischer Oberfläche, das auf dem Lotkörper (2) vor dem Beleuchtungsmittel (3) montiert ist und eine Linsenachse aufweist, die sich senkrecht zum Laserlicht erstreckt, das vom Beleuchtungsmittel (3) ausgesandt wird, um das Laserlicht, wie es vom Beleuchtungsmittel (3) ausgesandt wird, durch das Linsenmittel (5) planar abzulenken, um eine Laserlichtebene zu bilden, die quer zu einer Linsenachse des Linsenmittels (5) mit zylindrischer Oberfläche verläuft, wobei sich die Laserlichtebene so erstreckt, dass sie eine Objektivwand schneidet, um eine optische Bildlinie zu bilden; **dadurch gekennzeichnet, dass**
das Beleuchtungsmittel (3) umfasst: einen ersten Illuminator (31), einen zweite Illuminator (32) in Juxtaposition zum ersten Illuminator (31) sowie einen dritten Illuminator (33), der vom ersten Illuminator (31) und dem zweiten Illuminator (32) in einem rechten Winkel abweicht; und
wobei das Linsenmittel (5) mit zylindrischer Oberfläche umfasst: eine erste Linse (51) mit zylindrischer Oberfläche, die eine erste Linsenachse (X) parallel zur Lotrechten (2a) aufweist und vor dem ersten Illuminator (31) angeordnet ist, um eine horizontale Laserlichtebene (Ph) zur Nivellierung zu bilden, eine zweite Linse (52) mit zylindrischer Oberfläche, die eine zweite Linsenachse (X') aufweist, die sich senkrecht zur ersten Linsenachse (X) erstreckt und vor dem zweiten Illuminator (32) angeordnet ist, um eine erste vertikale Laserlichtebene (Pv) zur Lotung zu bilden, sowie eine dritte Linse (53) mit zylindrischer Oberfläche, die eine dritte Linsenachse (X") aufweist, die sich senkrecht zur zweiten Linsenachse (X') erstreckt und vor dem dritten Illuminator (33) angeordnet ist, um eine zweite vertikale Laserlichtebene (P'v) zu bilden, die von der ersten vertikalen Laserlichtebene (Pv) in einem rechten Winkel abweicht, zur Lotung und Winkelkalibrierung.

2. Optisches Nivellierungs-, Lotungs- und Winkelkalibrierungsinstrument nach Anspruch 1, worin das Stromversorgungsmittel (4) zumindest eine im Lotkörper (2) montierte Batterie umfasst.

## Revendications

1. Un instrument optique de mesure de niveau, de mesure de la vertical et de mesure d'étalonnage angulaire, comprenant :
un bâti (1) monté pour tourner sur une plate-forme (10) ;
un corps (2) de mesure de la verticale monté de manière universellement pendulaire sur le bâti (1) et définissant, de manière gravitationnelle, une ligne (2a) de mesure de la verticale ; et
un moyen d'éclairage (3) relié de manière électrique à un moyen d'alimentation en énergie électrique (4) et monté sur le corps (2) de mesure de la verticale pour émettre une lumière laser ; et
un moyen de lentille à surface cylindrique (5) monté sur ledit corps (2) de mesure de la verticale en face dudit moyen d'éclairage (3) et présentant un axe de lentille perpendiculaire de manière projective à la lumière laser émise à partir dudit moyen d'éclairage (3) pour faire diverger de manière plane la lumière laser émise à partir dudit moyen d'éclairage (3) à travers ledit moyen de lentille (5) pour former un plan de lumière laser transversal à un axe de lentille dudit moyen de lentille à surface cylindrique (5), ledit plan de lumière laser intersectant de manière projective une paroi objective pour constituer une ligne d'image optique ;
**caractérisé en ce que** :
ledit moyen d'éclairage (3) comprend : un premier organe d'éclairage (31), un second organe d'éclairage (32) juxtaposé audit premier organe d'éclairage (31), et un troisième organe d'éclairage (33) dévié d'un angle droit par rapport audit premier organe d'éclairage (31) et audit second organe d'éclairage (32) ; et
ledit moyen de lentille à surface cylindrique (5) comprenant une première lentille à surface cylindrique (51) présentant un premier axe de lentille (X) parallèle à la ligne de mesure de la verticale (2a) et mise en place en face dudit premier organe d'éclairage (31) pour constituer un plan de lumière laser horizontal (Ph) pour une mesure de niveau, une seconde lentille à surface cylindrique (52) présentant un second axe de lentille (X') perpendiculaire de manière projective audit premier axe de lentille (X) et mise en place en face dudit second organe d'éclairage (32) pour constituer un premier plan de lumière laser vertical (Pv) pour une mesure de niveau, et une troisième lentille à surface cylindrique (53) présentant un troisième axe de lentille (X") perpendiculaire de manière projective audit second axe de lentille (X') et mise en place en face dudit troisième organe d'éclairage (33) pour constituer un second plan de lumière laser vertical (P'v) écarté d'un angle droit par rapport audit premier plan de lumière laser vertical (Pv) pour une mesure de niveau et une mesure d'étalonnage angulaire.

2. Un instrument optique de mesure de niveau, de mesure de la verticale et de mesure d'étalonnage angulaire selon la revendication 1, dans lequel ledit moyen d'alimentation en énergie électrique (4) comprend au moins une batterie montée dans ledit corps (2) de mesure de niveau.
